# EUROPEAN PATENT APPLICATION

(11) **EP 4 786 828 A1**
(43) Date of publication of application: **05.08.2026**
(21) Application number: 24870891.9
(22) Date of filing: 26.09.2024
(51) Int. Cl.: F16K 1/00

(54) **SOLENOID VALVE AND ASSEMBLY METHOD THEREFOR**

(30) Priority: 28.09.2023 CN 202311276497
(71) Applicant: Zhejiang Dunan Artificial Environment Co., Ltd., Shaoxing Zhejiang 311835 (CN)
(72) Inventor: CAI, Peiyu, Shaoxing, Zhejiang 311835 (CN); JIN, Ju, Shaoxing, Zhejiang 311835 (CN); JIN, Yong, Shaoxing, Zhejiang 311835 (CN); WANG, Shaobo, Shaoxing, Zhejiang 311835 (CN)
(74) Representative: Petraz, Gilberto Luigi
(86) International application number: PCT/CN2024/121494
(87) International publication number: WO 2025/067352

(57) **Abstract**

The present application provides a solenoid valve (10) and an assembly method thereof. The solenoid valve (10) includes a valve body assembly (100). The valve body assembly (100) is provided with a valve cavity (140) and a main valve port (121). The solenoid valve (10) further includes a first iron core (400), a second iron core (500), a valve core assembly (200) and a piston assembly (300) disposed in the valve cavity (140). The valve core assembly (200) includes a sealing portion (210) and a valve rod portion (220). The valve core assembly (200) is movably in sealing fit with the guiding valve port (311) via the sealing portion (210). One end of the valve rod portion (220) is movably inserted into the first cavity (410) and is configured to be stopped in the first cavity (410), another end of the valve rod portion (220) passes through the second cavity (510) and is connected to the sealing portion (210), and the sealing portion (210) is configured to be stopped outside the second cavity (510).

## Description

### CROSS-REFERENCE TO RELATED APPLICATION

This application claims priority to Chinese patent application No. 202311276497.5, filed on September 28, 2023. The content of the above identified application is hereby incorporated herein in its entirety by reference.

### TECHNICAL FIELD

The present application relates to the field of solenoid valve technologies, and in particular, to a solenoid valve and an assembly method thereof.

### BACKGROUND

Many components make up a valve core assembly, and when the solenoid valve is assembled, the components are required to be installed into a valve sleeve. However, by such arrangement, an assembly error of a solenoid valve may increase, thereby affecting assembly precision of the solenoid valve, and reducing assembly efficiency of the solenoid valve.

### SUMMARY

Based on this, it is necessary to provide a solenoid valve and an assembly method thereof to solve problems of low assembly accuracy and low assembly efficiency of the solenoid valve.

The solenoid valve in the present application includes a valve body assembly. The valve body assembly is provided with a valve cavity and a main valve port configured to be in communication with the valve cavity. The solenoid valve further includes a first iron core, a second iron core, a valve core assembly and a piston assembly disposed in the valve cavity. The first iron core is provided with a first cavity. The second iron core is provided with a second cavity. The piston assembly is configured to open or close the main valve port. An end of the piston assembly away from the main valve port is provided with a guide valve port. The valve core assembly includes a sealing portion and a valve rod portion. The valve core assembly is movably in sealing fit with the guide valve port via the sealing portion. One end of the valve rod portion is movably inserted into the first cavity and is configured to be stopped in the first cavity, another end of the valve rod portion passes through the cavity and is connected to the sealing portion, and the sealing portion is configured to be stopped outside the second cavity.

In an embodiment, the solenoid valve includes a coil. Both the first iron core and the second iron core are movably disposed in the valve cavity. A height of the first iron core protruding from the coil is constantly greater than or equal to zero.

In an embodiment, the valve core assembly further includes a restricting portion. The restricting portion is connected to an outer sidewall of the valve rod portion. An inner wall of the first cavity is provided with a restricting protrusion corresponding to the restricting portion. The restricting portion is movably in fit with the inner wall of the first cavity and is configured to be stopped at an end of the restricting protrusion away from the main valve port.

In an embodiment, the sealing portion includes a connecting head and a sealing head. The connecting head is fixedly connected to the valve rod portion. The connecting head is configured to be stopped at an end of the second iron core away from the first iron core. The sealing head is mounted on the connecting head and is movably in sealing fit with the guide valve port.

In an embodiment, an inner wall of the second iron core is provided with a sealing guide hole coaxial the second iron core. An inner diameter of the sealing guide hole is greater than that of the cavity. A stop step is formed between the sealing guide hole and the cavity. The sealing portion is in guiding fit with the inner wall of the sealing guide hole. The sealing portion is configured to be stopped at the stop step.

In an embodiment, the piston assembly includes a plug body, a sealing ring and an extension portion. The extension portion is fixedly disposed at an end of the plug body adjacent to the main valve port. The sealing ring is sleeved outside the extension portion and is movably in sealing fit with the main valve port. A vertical distance between an end surface of the extension portion away from the guide valve port and the guide valve port is defined as *p*. A vertical distance between the main valve port and the guide valve port is defined as *q*. The vertical distance *p* between the end surface of the extension portion away from the guide valve port and the guide valve port is greater than the vertical distance *q* between the main valve port and the guide valve port.

In an embodiment, the solenoid valve further includes a top rod and a first elastic member. One end of the top rod abuts against an inner wall of the valve body assembly away from the main valve port, another end of the top rod extends into the first cavity and is in guiding fit with an inner wall of the first cavity, and the other end of the top rod is limited in the first cavity. The first elastic member is disposed in the first cavity, and two ends of the first elastic member abut against the top rod and the valve rod portion, respectively.

In an embodiment, the solenoid valve further includes an top rod and a first elastic member. The top rod includes a rod body and an outer protruding portion. The outer protruding portion is fixedly connected to an outer sidewall of the rod body or is integrated with the rod body. An end of the first elastic member away from the valve core assembly is configured to be stopped at the outer protruding portion.

In an embodiment, the sealing portion includes a connecting head and a sealing head, an end of the connecting head towards the guide valve port is provided with a snapping hole, and the sealing head is fixed in the snapping hole.

In an embodiment, the solenoid valve further includes a second elastic member. The second iron core is provided with a mounting hole towards the first iron core. At least part of the second elastic member is disposed in the mounting hole. The first iron core is provided with a protruding portion. One end of the second elastic member abuts against the second iron core, and another end of the second elastic member abuts against the protruding portion. When the solenoid valve is in a closed state, at least part of the protruding portion is disposed in the mounting hole.

In an embodiment, the second iron core is provided with a mounting hole coaxial and in communication with the second cavity. The mounting hole is disposed at an end of the second cavity adjacent to the first iron core. A diameter of the mounting hole is greater than that of the second cavity, such that a first restricting step is formed between the mounting hole and the second cavity, and an end of the second elastic member abuts against the first restricting step.

In an embodiment, the mounting hole includes a first hole section and a second hole section. The first hole section is in communication with the second cavity. The second hole section is configured as a counterbore. The second hole section is disposed at an end of the mounting hole adjacent to the first iron core. A diameter of the second hole section is greater than that of the first hole section, such that a second restricting step is formed between the first hole section and the second hole section. The protruding portion is movably in fit with the second hole section. When a coil of the solenoid valve is powered off, at least part of the protrusion is disposed in the second hole section.

In an embodiment, the valve body assembly includes a valve sleeve, a main body portion and a valve cover. The valve sleeve is connected to the main body portion via the valve cover. The valve sleeve includes a main body section, a large diameter section, and a transition section connecting to the main body section and the large diameter section. A size of the large diameter section is greater than that of the main body section. The valve sleeve is provided with an inclined section in fit with the transition section. A distance between the transition section and the inclined section is greater than or equal to zero.

The present application further provides a method for assembling the solenoid valve. The method is configured to install the solenoid valve described in any one of the above embodiments. The method includes following steps: disposing the second elastic member between the first iron core and the second iron core; inserting the valve rod portion through the first cavity and the second cavity from an end of the first cavity away from the second iron core, and restricting one end of the valve rod portion in the first cavity, such that the valve rod portion is not capable of being separated from a lower part of the first iron core; and installing a sealing portion at another end of the valve rod portion passing through the second cavity, and making the sealing portion be stopped outside the second cavity, such that the sealing portion is not capable of being separated from the second iron core through the second cavity.

In an embodiment, the valve body assembly includes a valve sleeve, a main body portion and a valve cover. The solenoid valve further includes a top rod and a first elastic member. The method further includes following steps: mounting the piston assembly to an inner cavity of the main body portion; connecting the valve sleeve to the valve cover; disposing the first elastic member in the first cavity; inserting one end of the top rod into the first cavity, making two ends of the first elastic member abut against the valve rod portion and the top rod, respectively, and restricting the one end of the top rod by the first iron core, such that the end of the top rod is not capable of being separated from an upper portion of the first iron core; disposing the second elastic member, the first iron core, the second iron core, the sealing portion, the valve rod portion, the first elastic member, and the top rod into the valve sleeve as a whole, making another end of the top rod abut against the valve sleeve; and connecting the valve cover to the main body portion.

Compared with the related art, according to the solenoid valve and the assembly method thereof provided in the present application, in an assembly process of the solenoid valve, the second elastic member may be disposed between the first iron core and the second iron core, the valve rod portion passes through the first cavity and the second cavity in sequence, the sealing portion is installed at the end of the valve rod portion passing through the second cavity, and the first elastic member may be disposed at the end of the first cavity away from the valve rod portion. Since the one end of the valve rod portion disposed in the first cavity is restricted by the first cavity, the sealing portion is stopped at one end of the second iron core away from the first iron core to restrict motion of the valve rod portion. Therefore, by restriction of the valve core assembly, the first iron core, the second iron core, the valve rod and the sealing portion can be assembled together, and the first iron core, the second iron core, the valve rod and the sealing portion may not be disassembled without removing the sealing portion. By such arrangement, during assembly of the solenoid valve, the first iron core, the second iron core, the valve rod, and the sealing portion may be first assembled to form an assembly body, and the assembly body is integrally installed in the valve sleeve, thereby improving assembly precision and assembly efficiency of the solenoid valve.

Details of one or more embodiments of the present application are presented in the attached drawings and descriptions below. Other features, purposes and advantages of this disclosure will become apparent from the description, drawings and claims.

### BRIEF DESCRIPTION OF THE DRAWINGS

In order to illustrate the embodiments of the present application more clearly, the drawings used in the embodiments will be described briefly. Apparently, the following described drawings are merely for the embodiments of the present application, and other drawings can be derived by those of ordinary skill in the art without any creative effort.
FIG. 1 is a schematic diagram of a solenoid valve in an embodiment of the present application.
FIG. 2 is a cross-sectional view of a solenoid valve in an embodiment of the present application.

Reference signs are as follows: 10 represents a solenoid valve; 100 represents a valve body assembly; 110 represents a valve sleeve; 111 represents a main body section; 112 represents a transition section; 113 represents a large diameter section; 120 represents a main body portion; 121 represents a main valve port; 122 represents a flow path inlet; 123 represents a flow path outlet; 130 represents a valve cover; 140 represents a valve cavity; 200 represents a valve core assembly; 210 represents a sealing portion; 211 represents a connecting head; 2111 represents a snapping hole; 212 represents a sealing head; 220 represents a valve rod portion; 230 represents a restricting portion; 300 represents a piston assembly; 310 represents a plug body; 311 represents a guide valve port; 312 represents a first through hole; 313 represents a second through hole; 320 represents a sealing ring; 330 represents an extension portion; 331 represents a channel hole; 340 represents a peripheral rim; 350 represents a buffer ring; 400 represents a first iron core; 410 represents a first cavity; 411 represents a restricting protrusion; 420 represents a protruding portion; 500 represents a second iron core; 510 represents a second cavity; 511 represents a sealing guide hole; 512 represents a stop step; 513 represents a mounting hole; 514 represents a first restricting step; 515 represents a second hole section; 516 represents a second restricting step; 517 represents a first hole section; 600 represents a top rod; 610 represents a rod body; 620 represents an outer protruding portion; 700 represents a first elastic member; 800 represents a second elastic member; and 900 represents a coil.

### DETAILED DESCRIPTION

The following will provide a clear and complete description of the technical solution in the embodiments of the present application, in communication with the accompanying drawings. Obviously, the described embodiments are only a part of the embodiments of the present application, not all of them. Based on the embodiments in the present application, all other embodiments obtained by ordinary skill in this art without creative labor fall within the scope of protection of the present application.

In the description of the present application, it should be understood that the terms "center", "longitudinal", "transversely", "length", "width", "thickness", "up", "down", "left", "right", "vertical", "horizontal", "top", "bottom", "inside", "outside", "clockwise", "counterclockwise", "axial", "radial", "circumferential" and so on denoting an orientation or a position relationship are based on the orientation or the position relationship shown in the attached drawings, it is just for convenience and simple to describe the present application, but not indicating or implying an apparatus and a device having a specific orientation, constructing and operating in a specific orientation, therefore cannot be understood as limiting the present application.

In addition, the terms "first" and "second" are only used to describe the purpose and can not be understood as indicating or implying relative importance or implying the quantity of indicated technical features. Therefore, the features limited to "first" and "second" can explicitly or implicitly include at least one of these features. In the description of the present application, "multiple" means at least two, such as two, three, etc., unless there is an otherwise specific limitation.

In the present application, unless otherwise specified and limited, the terms "installation", "contact", "connection", "fixation" and so on should be broadly understood. For example, it may be a fixed connection, a detachable connection, or integrated; it may be a mechanical connection or an electrical connection; and it may be directly connected or indirectly connected through an intermediate medium, and may be a connection within two components or an interaction relationship between two components, unless otherwise specified. For ordinary skilled in the field, the specific meanings of the above terms in the present application may be understood as required.

In the present application, unless there is an otherwise specifications and limitations, the first feature is "above" or "below" the second feature which may be a direct contact between a first feature and a second feature, or the first feature and the second feature may be in indirect contact through an intermediate medium. Moreover, the first feature is "on", "above", and "over" the second feature can be that the first feature is directly or diagonally above the second feature, or only indicates that the first feature is horizontally higher than the second feature. The first feature is "beneath", "below", and "under" the second feature can be that the first feature is directly or diagonally below the second feature, or only indicate that the horizontal height of the first feature is less than that of the second feature.

It should be noted that, when a member is considered "fixed to" or "set on" another member, it can be directly set on another member or there may be a centered member present simultaneously. When a member is considered "connected to" another member, it can be directly connected to another member or there may be a centered member present simultaneously. The terms "vertical", "horizontal", "upper", "lower", "left", "right" and similar expressions used in the specification of the present application are for illustrative purposes only and do not represent the only implementation method.

Unless otherwise defined, all technical and scientific terms used in this article have the same meanings as those commonly understood by those skilled in the art of the present application. The terms used in the specification of the present application are only for the purpose of describing specific embodiments and are not intended to limit the present application. The term "and/or" used in this article includes any and all combinations of one or more related listed items.

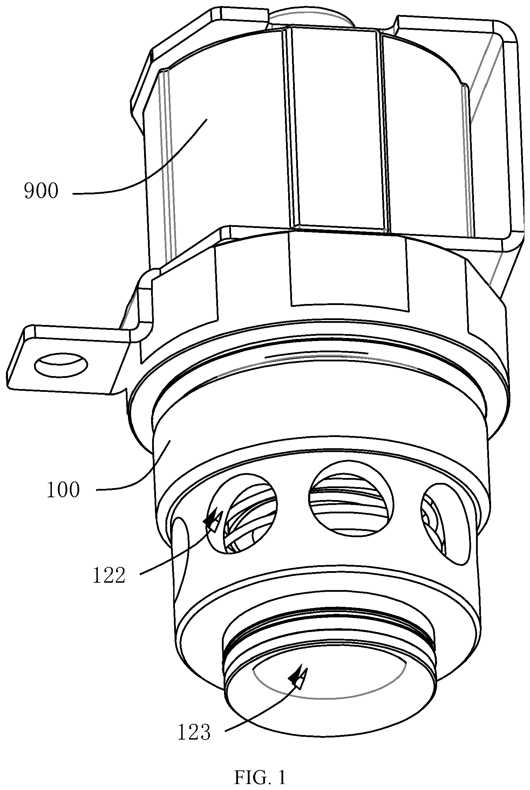

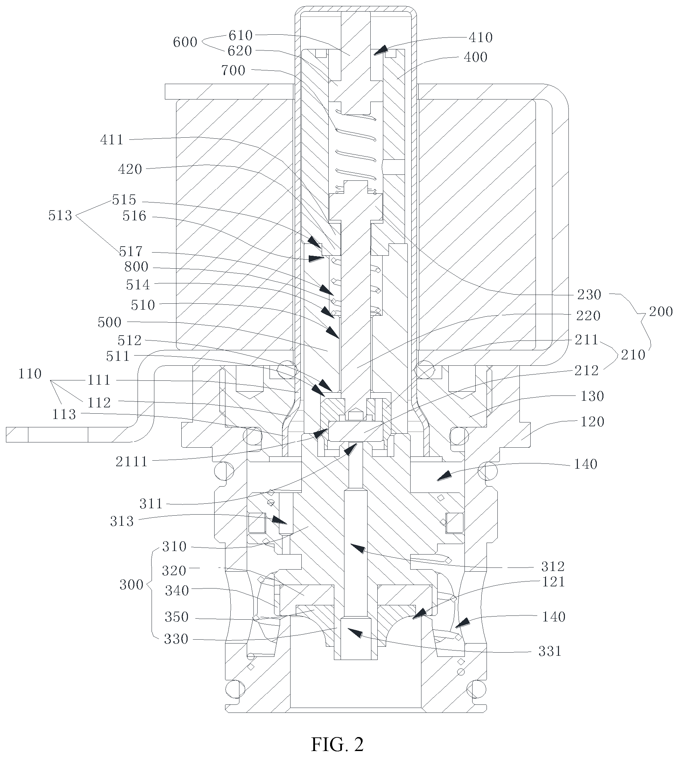

Referring to FIGs. 1 and 2, in an embodiment, a solenoid valve includes a valve body assembly 100, a valve core assembly 200, a piston assembly 300, a first iron core 400, a second iron core 500, and a top rod 600. The valve body assembly 100 includes a valve sleeve 110, a main body portion 120, and a valve cover 130. The valve sleeve 110 is fixedly connected to the valve cover 130 by welding or other connection methods. The valve cover 130 is connected to the main body portion 120.

Furthermore, in an embodiment, the valve sleeve 110 includes a main body section 111, a large diameter section 113, and a transition section 112 connecting to the main body section 111 and the large-diameter section 113. A size of the large diameter section 113 is greater than that of the main body section 111. The valve sleeve 110 is in interference fit and welded with the valve cover 130 via the large diameter section 113.

It should be noted that, since the size of the large diameter section 113 is greater than that of the main body section 111. Therefore, the size of the transition section 112 tends to increase along a direction from the main body section 111 to the large diameter section 113. In order to facilitate connecting the valve sleeve 110 to the valve cover 130, the large diameter section 113 is in interference fit and welded with the valve cover 130, and the transition section 112 may be in a fitting connection or a clearance fit with the valve cover 130, and the main body section 111 may be in a clearance fit or an interference fit and welded with the valve cover, which is not specifically limited herein. The valve cover 130 is provided with an inclined section in fit with the transition section 112. The inclined section is in fit with the transition section 112 to prevent the valve sleeve 110 from detaching from the valve cover 130. Since it cannot be ensured that the transition section 112 can be in complete contact with the inclined section of the valve cover 130, a distance between the transition section 112 and the inclined section of the valve cover 130 is greater than or equal to zero, i.e., the transition section 112 cannot be connected to the valve cover 130 and prevent the valve sleeve 110 from detaching at the same time. Therefore, the large diameter section 113 can be added, and the large diameter section 113 can be connected to the valve cover 130, such that the inclined section 113 can still prevent the valve sleeve 110 from detaching from an upper side of the valve cover 130.

The valve body assembly 100 is provided with a valve cavity 140. The valve core assembly 200, the piston assembly 300, the first iron core 400, the second iron core 500, and the top rod 600 are all disposed in the valve cavity 140. The main body portion 120 is provided with a main valve port 121, a flow path inlet 122, and a flow path outlet 123 that can be in communication with each other. The fluid can sequentially enter the valve cavity 140 via the flow path inlet 122 and can enter the flow path outlet 123 via the main valve port 121. An end of the piston assembly 300 is movably in sealing fit with the main valve port 121, so as to open or close the main valve port 121. An end of the piston assembly 300 away from the main valve port 121 is provided with a guide valve port 311. The piston assembly 300 is further provided with a first through hole 312 in communication with the guide valve port 311 and the main valve port 121.

The first iron core 400 is disposed at an end of the valve sleeve 110 away from the main body portion 120. One part of the second iron core 500 is disposed in the valve sleeve 110, and an other part of the second iron core 500 extends into the main body portion 120. The first iron core 400 is provided with a first cavity 410. The second iron core 500 is provided with a second cavity 510. One end of the valve core assembly 200 is movably inserted into the first cavity 410, and another end of the valve core assembly 200 passes through the second cavity 510 and is in fit with the guide valve port 311 in a movable sealing manner. A first elastic member 700 (including but not limited to a spring structure) is provided between the top rod 600 and the valve core assembly 200. The first elastic member 700 can apply an elastic force away from the top rod 600 to the valve core assembly 200.

In an embodiment, as shown in FIG. 2, one end of the top rod 600 abuts against an inner wall of the valve sleeve 110 away from the main valve port 121, and another end of the top rod 600 extends into the first cavity 410 and is in fit with the inner wall of the first cavity 410 in the guiding manner, another end of the top rod 600 is restricted in the first cavity 410. The first elastic member 700 is disposed in the first cavity 410. Two ends of the first elastic member 700 abut against the top rod 600 and the valve rod portion 220, respectively. The other end of the top rod 600 may be restricted by providing a riveting edge on a top of the first iron core 400.

By such arrangement, the first elastic member 700 can be located in the first cavity 410, such that the first elastic member 700 can be prevented from extending out of the first cavity 410 and easily bending and deforming, resulting in preventing the first elastic member 700 from bending and deforming to cause friction fracture between the first elastic member 700 and the first iron core 400, i.e., by such arrangement, a service life of the first elastic member 700 is prolonged.

In an embodiment, as shown in FIG. 2, the top rod 600 includes a rod body 610 and an outer protruding portion 620. The outer protruding portion 620 is fixedly connected to an outer sidewall of the rod body 610 or is integrated with the rod body 610. An end of the first elastic member 700 away from the valve core assembly 200 is stopped at the outer protruding portion 620.

As shown in FIG. 2, a second elastic member 800 is disposed between the first iron core 400 and the second iron core 500. One end of the second elastic member 800 abuts against the first iron core 400, and another end of the second elastic member 800 abuts against the second iron core 500 to apply a pushing force to the first iron core 400 and the second iron core 500.

By the second elastic member 800, it can be ensured that when the solenoid valve is powered off, the second elastic member 800 can push the valve core assembly 200, thereby ensuring an opening degree of the guide valve port 311.

Furthermore, the second iron core 500 is provided with a mounting hole 513 towards the first iron core 400. At least part of the second elastic member 800 is located in the mounting hole 513. The first iron core 400 is provided with a protruding portion 420. One end of the second elastic member 800 abuts against the second iron core 500, and another end of the second elastic member 800 abuts against the protruding portion 420. When the solenoid valve is in the closed state, at least part of the protruding portion 420 is located in the mounting hole 513.

In an embodiment, as shown in FIG. 2, the second iron core 500 is provided with a mounting hole 513 coaxial and in communication with the second cavity 510. The mounting hole 513 is disposed at an end of the second cavity 510 adjacent to the first iron core 400. A size of the mounting hole 513 is greater than that of the second cavity 510, such that a first restricting step 514 is provided between the mounting hole 513 and the second cavity 510, at least part of the second elastic member 800 is disposed in the mounting hole 513, one end of the second elastic member 800 abuts against the first restricting step 514, and another end of the second elastic member abuts against the first iron core 400.

By such arrangement, an installation of the second elastic member 800 is facilitated.

Furthermore, the second elastic member 800 is sleeved outside the valve core assembly 200.

Moreover, in an embodiment, as shown in FIG. 2, the mounting hole 513 includes a first hole section 517 and a second hole section 515. The first hole section 517 is in communication with the second cavity 510. The second hole section 515 is configured as a counterbore. The second hole section 515 is coaxial and in communication with the mounting hole 513. The second hole section 515 is disposed at an end of the mounting hole 513 adjacent to the first iron core 400. A diameter of the second hole section 515 is greater than that of the first hole section 517, such that a second restricting step 516 is provided between the first hole section 517 and the second hole section 515. The protruding portion 420 is in fit with the second hole section 515 in a movable manner, and when the coil 900 of the solenoid valve is powered off, at least a part of the protruding portion 420 away from the first iron core 400 extends into the second hole section 515. The second elastic member 800 may be restricted by the protruding portion 420 to prevent the second elastic member 800 from detaching from the mounting hole 513.

By such arrangement, the second elastic member 800 can be always disposed in the second cavity 510, such that the second elastic member 800 can be prevented from extending out of the second cavity 510 and being prone to be bending and deformation, resulting in preventing the second elastic member 800 from bending and deformation and from causing friction fracture between the second elastic member 800 and the second iron core 500, i.e., by such arrangement, a service life of the second elastic member 800 is prolonged.

It should be noted that when the coil 900 of the solenoid valve is in a power-off state, the second elastic member 800 can push the first iron core 400 and the second iron core 500 along opposite directions, and the first elastic member 700 is in a compressed state.

An operation process of the solenoid valve is as follows: when the coil 900 of the solenoid valve is powered on, the first iron core 400 and the second iron core 500 overcome an elastic force of the second elastic member 800 under an action of an electromagnetic force and attract each other. The first elastic member 700 extends and pushes the valve core assembly 200 to move downward, such that the valve core assembly 200 is in contact with and closes the guide valve port 311, and then, by a pushing action of the first elastic member 700 and liquid pressure, the valve core assembly 200 and the piston assembly 300 continue to move downward, and the piston assembly 300 closes the main valve port 121.

It should be noted that, as shown in FIG. 2, the piston assembly 300 is further provided with a second through hole 313. The second through hole 313 penetrates through an end of the piston assembly 300 adjacent to the main valve port 121 and an end of the piston assembly 300 adjacent to the second iron core 500, such that when the main valve port 121 is closed, the fluid can enter the valve cavity 140 of the piston assembly 300 adjacent to the second iron core 500 via the second through hole 313, so as to increase liquid pressure of the valve cavity 140 and increase pressure of the piston assembly 300 on the main valve port 121.

When the coil 900 of the solenoid valve is powered off, suction force between the first iron core 400 and the second iron core 500 disappears, by pushing action of the second elastic member 800, the first iron core 400 moves away from the main valve port 121 and drives the valve core assembly 200 to open the guide valve port 311. The fluid above the piston assembly 300 flows to the flow path outlet 123 via the guide valve port 311. Furthermore, by high pressure of the fluid at the flow path inlet 122, the piston assembly 300 drives the second iron core 500 to slide upward, and the main valve port 121 is opened by the piston assembly 300.

In the solenoid valve of the present application, both the first iron core 400 and the second iron core 500 are in fit with the valve sleeve 110 in the movable manner.

By such arrangement, assembly precision and assembly efficiency of the solenoid valve are improved. In an embodiment, as shown in FIG. 2, the valve core assembly 200 includes a sealing portion 210 and a valve rod portion 220. The valve core assembly 200 is movably in sealing fit with the pilot valve port 311 via a sealing portion 210. One end of the valve rod portion 220 is movably inserted into the first cavity 410 and can be stopped at an end of the first cavity 410 adjacent to the second iron core 500 to prevent the valve rod portion 220 from detaching from the first cavity 410 from a lower end of the first iron core 400, another end of the valve rod portion 220 passes through the second cavity 510 and is connected to the sealing portion 210, and the sealing portion 210 is stopped at an end of the second iron core 500 away from the first iron core 400 to restrict motion of the valve rod portion 220 and prevent the sealing portion 210 from detaching from the second cavity 510 through the second cavity 510. By such arrangement, the first iron core 400, the second iron core 500, the sealing portion 210, and the valve rod portion 220 may be assembled as a whole that is not separated from each other before a next step of installation.

During an assembly process of the solenoid valve, the second elastic member 800 may be first disposed between the first iron core 400 and the second iron core 500, the valve rod portion 220 is sequentially inserted into the first cavity 410 and the second cavity 510, the sealing portion 210 is installed at an end of the valve rod portion 220 extending out of the second cavity 510, and the first elastic member 700 may be disposed at an end of the first cavity 410 away from the valve rod portion 220. One end of the valve rod portion 220 disposed in the first cavity 410 is restricted by the first cavity 410, and the sealing portion 210 is stopped at an end of the second iron core 500 away from the first iron core 400, so as to limit motion of the valve rod portion 220. Therefore, by restricting action of the valve core assembly 200, the first iron core 400, the second iron core 500, and the valve core assembly 200 can be assembled together, and the first iron core 400, the second iron core 500, and the valve core assembly 200 are not disassembled without removing the sealing portion 210. By such arrangement, during assembly of the solenoid valve, the first iron core 400, the second iron core 500, the valve core assembly 200, the first elastic member 700, and the second elastic member 800 may be first assembled to form an assembly body, and the assembly body is integrally installed in the valve sleeve 110, resulting in improving the assembly precision and the assembly efficiency of the solenoid valve.

In an embodiment, as shown in FIG. 2, the valve core assembly 200 further includes a restricting portion 230, an inner wall of the first cavity 410 is provided with a restricting protrusion 411 corresponding to the restricting portion 230, the restricting portion 230 is fixedly connected to an outer wall of the valve rod portion 220 or integrally formed with the valve rod portion 220, and the restricting portion 230 is movably in fit with the inner wall of the first cavity 410 and can be stopped at an end of the restricting protrusion 411 away from the main valve port 121.

In an embodiment, the restricting portion 230 is in guiding fit with the inner wall of the first cavity 410, such that the valve rod portion 220 can be prevented from being eccentric.

It should be noted that, in an embodiment, when the coil 900 is energized, the restricting portion 230 and the restricting protrusion 411 are spaced apart from each other, such that when the coil 900 is de-energized, during upward motion of the first iron core 400, a free travel exists between the restricting portion 230 and the restricting protrusion 411. By such arrangement, on one hand, it can be ensured that the first iron core 400 is not stressed when moving upward, the first iron core 400 has an upward motion impulse, facilitating opening the solenoid valve. On the other hand, the restricting protrusion 411 does not block the restricting portion 230, which can ensure a sealing performance of the solenoid valve when the guide valve port 311 is closed.

In order to further prevent the valve core assembly 200 from being eccentric, in an embodiment, as shown in FIG. 2, an inner wall of the second iron core 500 is provided with a sealing guide hole 511 coaxial with the second iron core 500, an inner diameter of the sealing guide hole 511 is greater than that of the second second cavity 510, a stop step 512 is provided between the sealing guide hole 511 and the second cavity 510, the sealing portion 210 is in guiding fit with the inner wall of the sealing guide hole 511, and the sealing portion 210 is stopped at the stop step 512.

In an embodiment, as shown in FIG. 2, the sealing portion 210 includes a connecting head 211 and a sealing head 212, the connecting head 211 is snapped, screwed or welded to the valve rod portion 220. The connecting head 211 can be stopped at an end of the second iron core 500 away from the first iron core 400, the sealing head 212 is mounted on the connecting head 211, and the sealing portion 210 is movably in sealing fit with the guide valve port 311 via the sealing head 212. The sealing head 212 is made of rubber, silicone or soft plastic.

By such arrangement, it facilitates assembling the sealing portion 210 and the valve rod portion 220, and the sealing performance of the guide valve port 311 can be better.

In an embodiment, as shown in FIG. 2, one end of the connecting head 211 towards the guide valve port 311 is provided with a snapping hole 2111. The sealing head 212 is fixedly disposed in the snapping hole 2111.

In an embodiment, a height of the first iron core 400 protruding from the coil 900 is greater than or equal to zero. When the coil 900 of the solenoid valve is energized, a vertical distance between the end surface of the first iron core 400 away from the second iron core 500 and the guide valve port 311 is defined as *m*. A vertical distance between the end surface of the coil 900 away from the piston assembly 300 and the guide valve port 311 is defined as *n*. The vertical distance *m* between the end surface of the first iron core 400 away from the second iron core 500 and the guide valve port 311 is greater than the vertical distance *n* between the end surface of the coil 900 away from the piston assembly 300 and the guide valve port 311. When the coil 900 of the solenoid valve is energized, the vertical height of the first iron core 400 is the lowest, i.e., when the solenoid valve is vertically disposed, the height of the upper end surface of the first iron core 400 is always higher than that of an upper end surface of the coil 900.

By such arrangement, when the height of the upper end surface of the first iron core 400 is lower than that of the upper end surface of the coil 900. The coil 900 is prevented from generating an upward suction force on the first iron core 400, and the suction force will prevent the first elastic member 700 from pushing the first iron core 400 downward to move. By such arrangement, the arrangement can prevent the coil 900 from preventing the first elastic member 700 from pushing the first iron core 400 to move downward, i.e., opening and closing of the solenoid valve can be prevented from being affected.

In an embodiment, as shown in FIG. 2, the piston assembly 300 includes a plug body 310, a sealing ring 320 and an extension portion 330. The piston assembly 300 is in guiding fit with an inner wall of the valve cavity 140 via the plug body 310. The guide valve port 311, the first through hole 312 and the second through hole 313 are all disposed on the plug body 310. The extension portion 330 is fixedly disposed at an end of the plug body 310 adjacent to the main valve port 121. The extension portion 330 is provided with a channel hole 331. The guide valve port 311 can be in communication with the main valve port 121 via the first through hole 312 and the channel hole 331 in sequence. The sealing ring 320 is sleeved on an outer side of the extension portion 330, and the piston assembly 300 is movably in sealing fit with the main valve port 121 via the sealing ring 320.

By such arrangement, it facilitates assembling the sealing ring 320 and reduces assembly difficulty of the piston assembly 300.

In order to improve a sealing performance of the piston assembly 300, the sealing ring 320 is made of rubber, silicone or soft plastic.

In an embodiment, as shown in FIG. 2, an outer side of the plug body 310 may be provided with a peripheral rim 340 integrated with or fixed to the plug body 310. An inner side of the sealing ring 320 is sleeved on the extension portion 330, and an outer side of the sealing ring 320 abuts against the peripheral rim 340.

In an embodiment, as shown in FIG. 2, a vertical distance between an end surface of the extension portion 330 away from the guide valve port 311 and the guide valve port 311 is defined as *p*. A vertical distance between the main valve port 121 and the guide valve port 311 is defined as *q*. The vertical distance *p* between an end surface of the extension portion 330 away from the guide valve port 311 and the guide valve port 311 is greater than the vertical distance *q* between the main valve port 121 and the guide valve port 311. That is, when the solenoid valve is vertically disposed, the height of the end surface of the extension portion 330 away from the guide valve port 311 is lower than that of the main valve port 121.

By such arrangement, when the piston assembly 300 moves away from the main valve port 121 to open the main valve port 121, a part of the extension portion 330 can be located in the main valve port 121, which can effectively increase the pressure difference between two sides of the plug body 310, thereby reducing a motion resistance of the piston assembly 300. The lower position of the end surface of the extension portion 330 away from the guide valve port 311 relative to the main valve port 121, the greater pressure differential across the piston assembly 300. When the main valve port 121 is opened, a large pressure difference acts on the piston assembly 300, so as to reduce an overall driving force for opening the solenoid valve.

In an embodiment, as shown in FIG. 2, the piston assembly 300 further includes a buffer ring 350. The buffer ring 350 is sleeved on an outer side of the extension portion 330. In a direction from the sealing ring 320 to a head portion of the extension portion 330 (i.e., an end of the extension portion 330 away from the pilot valve port 311), a cross-sectional area of the buffer ring 350 decreases.

In an embodiment, the buffer ring 350 is in a tapered cylindrical shape as a whole.

By such arrangement, the piston assembly 300 facilitates buffering the fluid, resulting in preventing the fluid from flowing randomly, and reducing noise of the solenoid valve.

The present application further provides a method for assembling the solenoid valve. The method includes the following steps: disposing a second elastic member 800 between a first iron core 400 and a second iron core 500; penetrating a valve rod portion 220 from an end of the first cavity 410 away from the second iron core 500 through a first cavity 410 and a second cavity 510, in which an end of the valve rod portion 220 disposed in the first cavity 410 is restricted by the first cavity 410, such that the valve rod portion 220 cannot be detached from the lower part of the first iron core 400; and installing the sealing portion 210 at the end of the valve rod portion 220, in which the end of the valve rod portion 220 passes through the second cavity 510, and the sealing portion 210 is stopped outside the second cavity 510, such that the sealing portion 210 cannot be detached from the second iron core 500 through the second cavity 510.

Furthermore, the method for assembling the solenoid valve further includes following steps: mounting the piston assembly 300 to an inner cavity of the main body portion 120; connecting the valve sleeve 110 to the valve cover 130; disposing the first elastic member 700 in the first cavity 410; inserting one end of the top rod 600 into the first cavity 410, making two ends of the first elastic member 700 abut against the valve rod portion 220 and the top rod 600, respectively, and restricting the one end of the top rod 600 by the first iron core 400, such that the end of the top rod 600 is not capable of being separated from an upper portion of the first iron core 400; disposing the second elastic member 800, the first iron core 400, the second iron core 500, the sealing portion 210, the valve rod portion 220, the first elastic member 700, and the top rod 600 into the valve sleeve 110 as a whole, making another end of the top rod 600 abut against the valve sleeve 110; and connecting the valve cover 130 to the main body portion 120.

The various technical features of the above embodiments can be combined in any way. In order to make the description concise, not all possible combinations of the various technical features in the above embodiments have been described. However, as long as there is no contradiction in the combination of these technical features, they should be considered within the scope of the specification

The above embodiments only express several embodiments of the present application, and their descriptions are more specific and detailed, but should not be understood as limiting the scope of the disclosure. It should be pointed out that for ordinary skill in the art, several modifications and improvements can be made without departing from the concept of the disclosure, which are within the scope of protection of the disclosure. Therefore, the scope of protection of the present application should be based on the attached claims.

## Claims

1. A solenoid valve, **characterized by** comprising: a valve body assembly, wherein the valve body assembly is provided with a valve cavity and a main valve port configured to be in communication with the valve cavity, the solenoid valve further comprises a first iron core, a second iron core, a valve core assembly and a piston assembly disposed in the valve cavity, the first iron core is provided with a first cavity, the second iron core is provided with a second cavity, the piston assembly is configured to open or close the main valve port, and an end of the piston assembly away from the main valve port is provided with a guide valve port; and
the valve core assembly comprises a sealing portion and a valve rod portion, the valve core assembly is movably in sealing fit with the guiding valve port via the sealing portion, one end of the valve rod portion is movably inserted into the first cavity and is configured to be stopped in the first cavity, another end of the valve rod portion passes through the second cavity and is connected to the sealing portion, and the sealing portion is configured to be stopped outside the second cavity.

2. The solenoid valve of claim 1, further comprising a coil, wherein both the first iron core and the second iron core are movably disposed in the valve cavity; and a height of the first iron core protruding from the coil is greater than or equal to zero.

3. The solenoid valve of claim 1, wherein the valve core assembly further comprises a limiting portion, the limiting portion is connected to an outer sidewall of the valve rod portion, an inner wall of the first cavity is provided with a limiting protrusion corresponding to the limiting portion, and the limiting portion is movably in fit with the inner wall of the first cavity and is configured to be stopped at an end of the limiting protrusion away from the main valve port.

4. The solenoid valve of claim 1, wherein the sealing portion comprises a connecting head and a sealing head, the connecting head is fixedly connected to the valve rod portion, the connecting head is configured to be stopped at an end of the second iron core away from the first iron core, and the sealing head is mounted on the connecting head and is movably in sealing fit with the guiding valve port.

5. The solenoid valve of claim 1, wherein an inner wall of the second iron core is provided with a sealing guide hole coaxial with the second iron core, an inner diameter of the sealing guide hole is greater than that of the second cavity, a stop step is provided between the sealing guide hole and the second cavity, the sealing portion is in guiding fit with the inner wall of the sealing guide hole, and the sealing portion is configured to be stopped at the stop step.

6. The solenoid valve of claim 1, wherein the piston assembly comprises a plug body, a sealing ring and an extension portion, the extension portion is fixedly disposed at an end of the plug body adjacent to the main valve port, and the sealing ring is sleeved outside the extension portion and is movably in sealing fit with the main valve port; and
a vertical distance between an end surface of the extension portion away from the guiding valve port and the guiding valve port is defined as *p*, a vertical distance between the main valve port and the guiding valve port is defined as *q*, and the vertical distance *p* between the end surface of the extension portion away from the guiding valve port and the guiding valve port is greater than the vertical distance *q* between the main valve port and the guiding valve port.

7. The solenoid valve of claim 1, further comprising a top rod and a first elastic member, wherein one end of the top rod abuts against an inner wall of the valve body assembly away from the main valve port, the other end of the top rod extends into the first cavity and is in guiding fit with an inner wall of the first cavity, and the other end of the top rod is limited in the first cavity; the first elastic member is disposed in the first cavity, and two ends of the first elastic member abut against the top rod and the valve rod portion, respectively.

8. The solenoid valve of claim 1, further comprising a top rod and a first elastic member, wherein the top rod comprises a rod body and an outer protruding portion, the outer protruding portion is fixedly connected to an outer sidewall of the rod body or is integrated with the rod body, and an end of the first elastic member away from the valve core assembly is configured to be stopped at the outer protruding portion.

9. The solenoid valve of claim 1, wherein the sealing portion comprises a connecting head and a sealing head, an end of the connecting head towards the guide valve port is provided with a snapping hole, and the sealing head is fixed in the snapping hole.

10. The solenoid valve of claim 1, further comprising a second elastic member, wherein the second iron core is provided with a mounting hole towards the first iron core; at least part of the second elastic member is disposed in the mounting hole; the first iron core is provided with a protruding portion, one end of the second elastic member abuts against the second iron core, and another end of the second elastic member abuts against the protruding portion; and
when the solenoid valve is in a closed state, at least part of the protruding portion is disposed in the mounting hole.

11. The solenoid valve of claim 10, wherein the mounting hole is disposed at an end of the second cavity adjacent to the first iron core, and a diameter of the mounting hole is greater than that of the second cavity, such that a first limiting step is provided between the mounting hole and the second cavity, and an end of the second elastic member abuts against the first limiting step.

12. The solenoid valve of claim 10, wherein the mounting hole comprises a first hole section and a second hole section, the first hole section is in communication with the second cavity, the second hole section is configured as a counterbore, the second hole section is disposed at an end of the mounting hole adjacent to the first iron core, a diameter of the second hole section is greater than that of the first hole section, such that a second limiting step is provided between the first hole section and the second hole section, the protruding portion is movably in fit with the second hole section, and when a coil of the solenoid valve is powered off, at least part of the protrusion is disposed in the second hole section.

13. The solenoid valve of claim 1, wherein the valve body assembly comprises a valve sleeve, a main body portion and a valve cover, and the valve sleeve is connected to the main body portion via the valve cover; and
the valve sleeve comprises a main body section, a large diameter section, and a transition section connecting to the main body section and the large diameter section, a size of the large diameter section is greater than that of the main body section, the valve sleeve is provided with an inclined section in fit with the reducing section, and a distance between the reducing section and the inclined section is greater than or equal to zero.

14. A method for assembling the solenoid valve of any one of claims 1 to 13, **characterized in that**, wherein the solenoid valve includes a second elastic member, the method comprises following steps:
disposing the second elastic member between the first iron core and the second iron core;
inserting the valve rod portion through the first cavity and the second cavity from an end of the first cavity away from the second iron core, and restricting one end of the valve rod portion in the first cavity, such that the valve rod portion is not capable of being separated from a lower part of the first iron core; and
installing a sealing portion at another end of the valve rod portion passing through the second cavity, and making the sealing portion be stopped outside the second cavity, such that the sealing portion is not capable of being separated from the second iron core through the second cavity.

15. The method of claim 14, wherein the valve body assembly comprises a valve sleeve, a main body portion and a valve cover; the solenoid valve further comprises a top rod and a first elastic member,
the method further comprises following steps:
mounting the piston assembly to an inner cavity of the main body portion;
connecting the valve sleeve to the valve cover;
disposing the first elastic member in the first cavity;
inserting one end of the top rod into the first cavity, making two ends of the first elastic member abut against the valve rod portion and the top rod respectively, and restricting the one end of the top rod by the first iron core, such that the end of the top rod is not capable of being separated from an upper portion of the first iron core;
disposing the second elastic member, the first iron core, the second iron core, the sealing portion, the valve rod portion, the first elastic member, and the top rod into the valve sleeve as a whole, making another end of the top rod abut against the valve sleeve; and connecting the valve cover to the main body portion.
